# EUROPEAN PATENT APPLICATION

(11) **EP 1 406 153 A2**
(43) Date of publication of application: **07.04.2004**
(21) Application number: 03255302.6
(22) Date of filing: 27.08.2003
(51) Int. Cl.: G06F 3/00, G06K 17/00

(54) **Slip processing device, slip processing method and program enabling a computer to perform the process**

(30) Priority: 04.09.2002 JP 2002258960
(71) Applicant: FUJITSU LIMITED, Kawasaki-shi, Kanagawa 211-8588 (JP)
(72) Inventor: Shimada, Tsuyahiko, Fujitsu Terminal Systems Ltd., Maebashi-shi Gunma 371-0855 (JP); Yamamoto, Kazunori, Fujitsu Terminal Systems Ltd., Maebashi-shi Gunma 371-0855 (JP); Shimada, Yoshiharu, Fujitsu Terminal Systems Ltd., Maebashi-shi Gunma 371-0855 (JP)
(74) Representative: Stebbing, Timothy Charles

(57) **Abstract**

A slip processing device (100) that processes a slip with an answer column to be checked with a mark comprises a slip recognition unit (4) detecting the mark checked in the answer column, based on the image data of the slip, an answer column coloring unit (5) modifying the values of pixels located in the vicinity of the answer column in the image data, based on the detected result, and an output control unit (6) outputting the image data, whose pixel values are modified based on the detected result, on a display device. Thus, an operator can easily distinguish an answer column checked with a mark from one without a check mark in the image.

## Description

The present invention relates to a technology for recognizing the contents of information by digitally processing information described on paper, and particularly, it relates to a technology for helping an operator recognize a result more clearly.

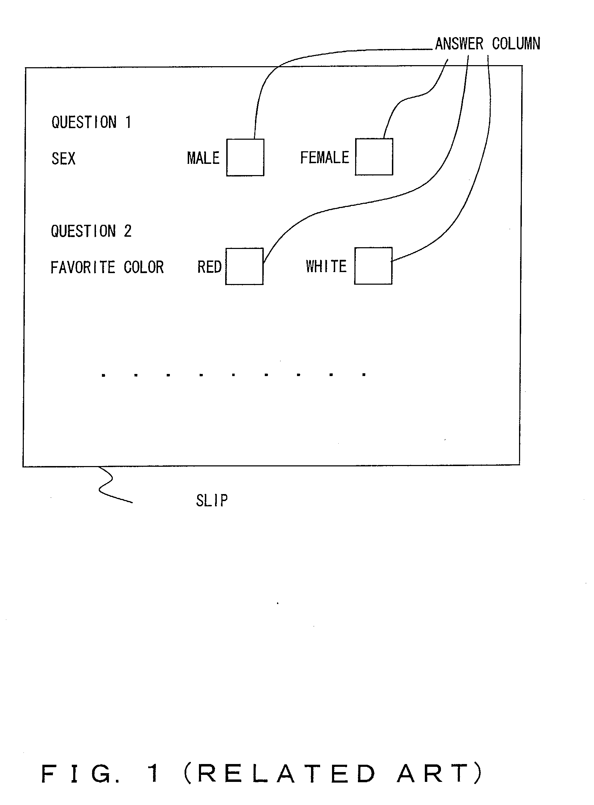

Conventionally, there is a technology for automatically recognizing contents described on a slip by digitally processing the slip that describes answers to questions or examinations using a machine. Fig. 1 shows an example of the slip to which such a technology is applied. As shown in Fig. 1, such a slip contains a plurality of items (choices) for each question and columns corresponding to each item (answer column). A respondent or an examinee selects appropriate items from the plurality of items and marks an answer column corresponding to the item (checks it with a mark, circle or paints over it) . For example, the slip shown in Fig. 1 contains two items; "male" and "female", for question 1 "What is your sex?" and an answer column for each item. If a respondent is male, the answer column corresponding to "male" is checked with a mark. If a respondent is female, the answer column corresponding to "female" is checked with a mark.

There is already a technology for mechanically recognizing a selected item by detecting a check mark that is entered on such a slip. After the recognition process is performed, an operator checks whether the recognition is correctly conducted. If there is a column that is incorrectly recognized, the operator modifies the incorrect column. The check/modification process by the operator is described in detail using information outputted on the display of an operator's processing device.

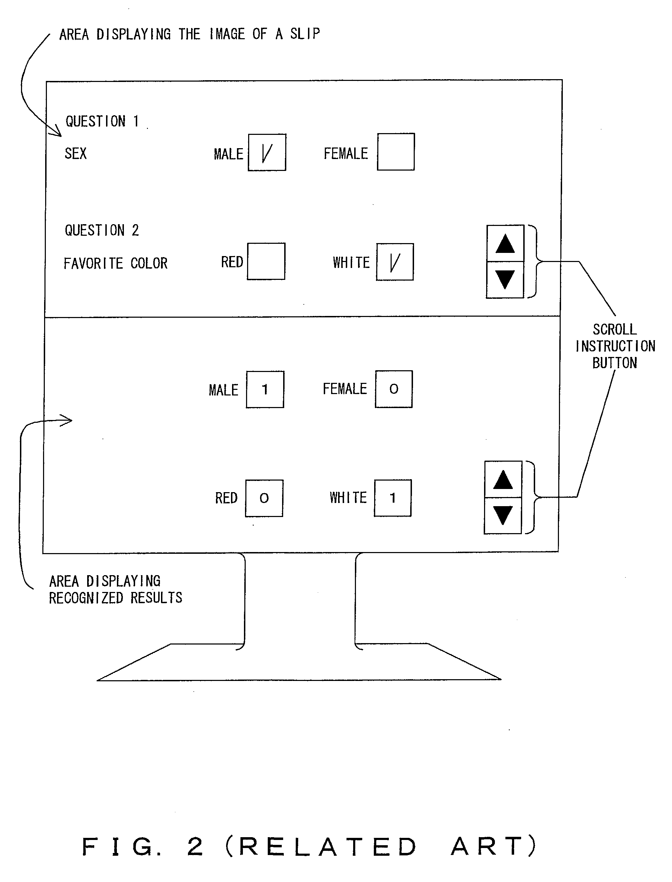

Fig. 2 shows an example of the recognized result check screen. As shown in Fig. 2, the display screen is vertically divided into two sections. Image data obtained by reading a slip by a scanner or the like is displayed in the upper section (an area displaying image data is hereinafter called an " image display area") . The recognized result of the answer columns for a plurality of questions is outputted in the same display order as that of the slip in the lower section (an area displaying a recognized result is hereinafter called a "recognized result display area"). In Fig. 2, recognized results are displayed using numeric values "1" and "0". "1" indicates that an answer column corresponding to the item is checked with a mark, and "0" indicates that an answer column corresponding to the item is not checked with a mark.

If an image display area cannot display the entire image data, a scroll instruction button for vertically scrolling the image data is further provided for the area. Similarly, if the recognized result display area cannot display the entire result, such a scroll instruction button is further provided. In order to display the image data or recognized result of another question, which is not displayed on the screen, the operator vertically scrolls each area by operating a scroll instruction button displayed in the image display area or the recognized result display area using a pointing device.

The operator checks whether recognition is correctly conducted, by comparing the answer column of an image data outputted in the image display area with a corresponding recognized result outputted in the recognized result display area of the check screen. If an answer column is incorrectly recognized, the operator modifies the answer column by moving a cursor or a pointer to a position indicating the recognized result in the incorrectly recognized answer column and replacing the numeric value displayed in the position with a correct one using a keyboard, which is not shown in Fig. 2. In other words, a recognized result display area is also the input field of a modified value.

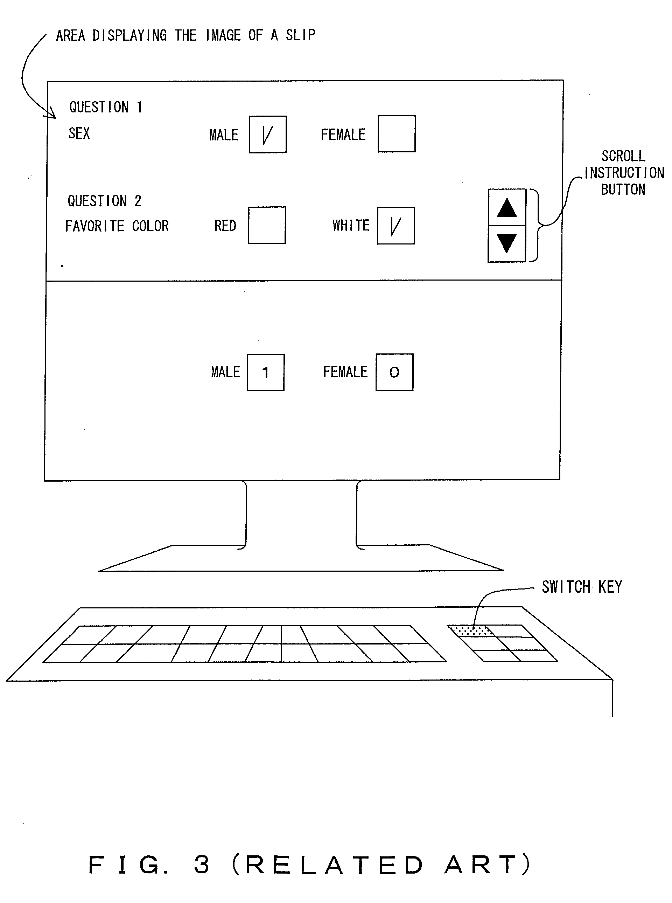

Fig. 3 shows another recognized result check screen. As in the check screen shown in Fig. 2, Fig. 3 shows a display screen that is vertically divided into two sections. Image data and a recognized result are displayed in the upper and lower sections, respectively. As in Fig. 2, image data outputted in the image display area can be vertically scrolled using a scroll instruction button. Unlike in Fig. 2, the recognized result of only one question is outputted in the recognized result display area at a time. In order to display the recognized results of questions other than the question currently outputted in the recognized result display area, the operator operates a screen switching key that is provided for a keyboard connected to the processing device. The check/modification method of a recognized result is the same as that of the check screen shown in Fig. 2.

Technology for modifying a result obtained by recognizing a mark in a slip is disclosed in Japanese Patent Laid-open No. 55-164937. According to this invention, an operator designates a part to be modified in the image data displayed in the check screen using an electric pen and further designates a value to replace it.

According to the prior art, in order to check a recognized result and modify a recognition error, an operator must detect an incorrectly recognized answer column in the image data outputted on a display device. However, in the case of color display, if a color used to check an answer column with a mark on the slip is the same as that of the ink of a writing instrument used by a respondent or an examinee to check the answer column with a mark, it is difficult to detect the answer column checked with a colored mark (natural color) in the image data displayed on the check screen, which is a problem.

In the case of a monochrome display, even if a color used to check an answer column with a mark on the slip is different from that of the ink of a writing instrument, these colors are converted into one of white, gray or black. Therefore, a mark cannot be easily distinguished. As a result, it becomes difficult for the operator to detect an answer column checked with a mark in the image data, which is also a problem.

Furthermore, in order to check whether recognition is correctly conducted, the operator must compare an answer column contained in the image data with the recognized result of the answer column in the check screen. In that case, the operator must detect not only the answer column checked with a mark in the image data, but also the recognized result of an item corresponding to the answer column checked with a mark in the check screen. Therefore, if the check screen shown in Fig. 2 cannot display all questions at a time, the operator must scroll the image display area and the recognized result display area by operating their respective scroll instruction buttons. Such an operation is troublesome, which is another problem.

Also, in the check screen shown in Fig. 3, such comparison must be conducted by switching the recognized result displayed in the lower section using the screen switch key of a keyboard while scrolling the image data displayed in the upper section using another scroll instruction button. Such an operation is troublesome, which is also a problem.

Furthermore, if a recognition error is detected at the time of the check, the operator must input a correct numeric value in a position indicating the recognized result of an incorrectly recognized answer column in the recognized result display area using the keyboard. Such numeric value input is also troublesome, which is another problem.

According to the invention disclosed in the above patent application, instead of the operator detecting and modifying a recognition error, the processing device detects an entry error on the slip and displays information indicating a recognized result and a detected error on the display screen. Then, the operator instructs the processing device to modify the detected point, based on the information displayed on the screen. In this case, since the operator cannot check the recognized result, the problem described above is not solved.

Accordingly, it is desirable to enable an operator to easily distinguish an answer column checked with a mark from one without a check mark in image data. It is also desirable to simplify its modification process. Furthermore, it is desirable to simplify an operation in which the operator compares image data with its recognized result.

According to one aspect of the present invention, the slip processing device that processes a slip with an answer column to be checked with a mark, comprises a slip recognition unit detecting the mark checked in the answer column, based on image data on the slip, an image accentuation unit accentuating an image located in the vicinity of the answer column of the image data by a specific accentuation method, based on the detected result, and an output control unit outputting the accentuated image data on a display device.

The slip recognition unit detects a mark checked in an answer column, based on the image data of the slip. The image accentuation unit accentuates an image located in the vicinity of the answer column of the image data, based on its detected result. The output control unit outputs the accentuated image data on the display device, based on the detected result. Since the image is accentuated based on the result of mark detection, the operator of the slip processing device can easily distinguish an answer column checked with a mark from one without a check mark in the image data outputted on the display device.

The image accentuation unit can also be replaced with a pixel value modification unit modifying the pixel value of pixels located in the vicinity of the answer column.

Specifically, in the case of monochrome display, the pixel value modification unit, for example, can also reverse the back/white color of pixels located in the vicinity of an answer column checked with a mark. Alternatively, the pixel value modification unit can modify their pixel values in such a way that the width of the frame of the answer column can be expanded. In the case of color (natural color) display, the pixel value modification unit, for example, can also modify their pixel values in such a way that an answer column checked with a mark can differ in the color of pixels located in the vicinity of each answer column from one without a check mark.

In the configuration described above, the pixel value modification unit can also differentiate modified pixel values from the values of pixels that indicate a mark. Thus, a mark is prevented from becoming inconspicuous in image data outputted on the display device due to the change of the pixel values.

In the configuration described above, the pixel value modification unit can also modify the values of pixels other than the pixels that indicate a mark when modifying the values of pixels located in the vicinity of the answer column. Alternatively, the pixel value modification unit can modify the values of pixels that indicate the mark in this case. Thus, since the shape of a mark in the image data is outputted to the display device before and after the modification of pixel values, an operator can determine whether the slip processing device correctly detects a mark, based on the mark in the image data obtained after the pixel values are modified.

If pixel values are modified, pixels located within the frame of the answer column can also be used instead of those located in its vicinity. Alternatively, pixels located in the vicinity of the answer column, whose values are to be modified, can be located outside the frame of the answer column and can be located less than a specific number of pixels away from the frame. The latter method is suited, for example, for the case where an answer column is painted over with a mark.

The slip processing device having such a configuration can also further comprise a recognized result modification unit modifying the detected result. In this case, if an answer column in the image data, whose pixel values are modified, is designated, the recognized result modification unit can also modify its detected result and further modify the values of pixels located in the vicinity of the designated answer column. Then, the output control unit can also output the image data, whose pixel values are modified, on the display device.

By adopting such a configuration, the operator of the slip processing device can easily modify a detected result by designating an answer column in the image data outputted on the display device, whose pixel values are modified, and can check the modified result by the change in the image data outputted on the display device.

Thus, if it is necessary for the operator to modify the detected result when the result of mark detection is checked, the operator can modify it using the image data outputted on the display device.

The recognized result modification unit can also determine the detected result after modification, based on the detected result of a mark checked in the designated answer column. More specifically, for example, if the detected result of the designated answer column indicates that there is no mark in the answer column before modification although in reality there is not a mark there, the recognized result modification unit determines to modify the detected result in such a way as to have a mark checked in the answer column. Conversely, if the detected result of the designated answer column indicates that there is a mark in the answer column before modification although in reality there is be a mark there, the recognized result modification unit determines to modify the detected result in such a way as to have no mark there. Thus, the operator need not input a detected result after modification and accordingly the modification process can be simplified.

The slip processing device having such a configuration can also further comprise a pointing device. In this case, the designation of the pixels can also be conducted by selecting the image data outputted on the display device using the pointing device. By adopting a pointing device as an input device, the operability of the operator can be improved.

On the slip processing device provided with the recognized result modification unit described above, the slip recognition unit can also generate detected result information indicating its detected result, and the output control unit can also display the detected result information as well as the image data on the display device. If an answer column is designated, the recognized result modification unit can modify the detected result information, based on the modified result. If the recognized result modification unit modifies the detected result information, the output control unit can also display the detected result information after modification on the display device.

Thus, the operator of the slip processing device can check a detected result using the image data outputted on the display device and simultaneously can check a modified result using the detected result information outputted on the display device.

When checking a detected result, the operator compares image data outputted on the display device with detected result information corresponding to a question in the image data outputted on the display device. In this case, scrolling for image data is independent of that for detected result information. In that case, after the operator issues one scroll instruction, then he/she issues the other scroll instruction in accordance with the previous scrolling. Accordingly, the process becomes troublesome.

Therefore, in the configuration described above, the output control unit can also link the scrolling of image data outputted on the display device with that of the detected result information outputted on the display device. By linking the scrolling of image data with that of detected result information in such a way as to simultaneously display image data and its detected result corresponding to a question in the image data currently outputted on the display device, the operator's operation can be simplified.

Alternatively, the output control unit can display detected result information for each question contained in a slip on the display device. If the image data outputted on the display device is scrolled, the output control unit can detect its question outputted in the prescribed position of the display device and can display detected result information corresponding to the detected question. In this case too, the image data and the detected result corresponding to the question in the image data currently outputted on the display device can be simultaneously outputted on the display device.

A slip processing method performing the same process as each operation of the slip processing device can also obtain the same operation/effect as the slip processing device, and accordingly it can also solve the problems described above.

A computer program enabling a computer to perform the process that is performed by the slip processing device can also solve the problems by temporarily storing the program in memory provided for the computer and by enabling the computer to read the program from the memory and to execute it.

A computer-readable storage medium on which is recorded the computer program can also solve the problems by enabling a computer to read the program and to execute it.

The features and advantages of the present invention will be more clearly appreciated from the following description taken in conjunction with the accompanying drawings in which like elements are denoted by like reference numerals and in which:
Fig. 1 shows an example of a slip;
Fig. 2 shows an example of the recognized result check screen of the prior art;
Fig. 3 shows an example of another recognized result check screen of the prior art;
Fig. 4 shows the configuration of the slip processing device of the first preferred embodiment;
Fig. 5 shows an example of the data structure of an answer column position definition table;
Fig. 6 shows the coordinates of the slip;
Fig. 7 shows an example of the data structure of a marked item recognized result table;
Fig. 8 shows an example of the data structure of a color definition table;
Fig. 9A shows an example of a screen that displays a generated slip;
Fig. 9B shows an example of a printed slip;
Fig. 9C shows an example of the position definition information of the generated slip;
Fig. 10A shows an example of a slip read by the slip processing device;
Fig. 10B shows an example of a recognized result of a mark checked in the read clip;
Fig. 10C shows an example of the recognized result check screen;
Fig. 11 is a flowchart showing the slip mark recognition process;
Fig. 12 shows an example of the bit map of an answer column in the image data;
Fig. 13A shows the case where the entire answer column is painted over with a color other than the background color;
Fig. 13B shows one slip coloring method in the case shown in Fig. 13A;
Fig. 14A shows an example of a recognized result check screen;
Fig. 14B shows an example of recognized result information corresponding to the recognized result shown in Fig. 14A;
Fig. 14C shows an example of the check screen on which a recognized result is modified;
Fig. 14D shows an example of the recognized result information corresponding to the recognized result after modification shown in Fig. 14C;
Fig. 15 is a flowchart showing the modification process;
Fig. 16 shows the relationship between the coordinates of a slip, an image in image data and the displayed part of the screen;

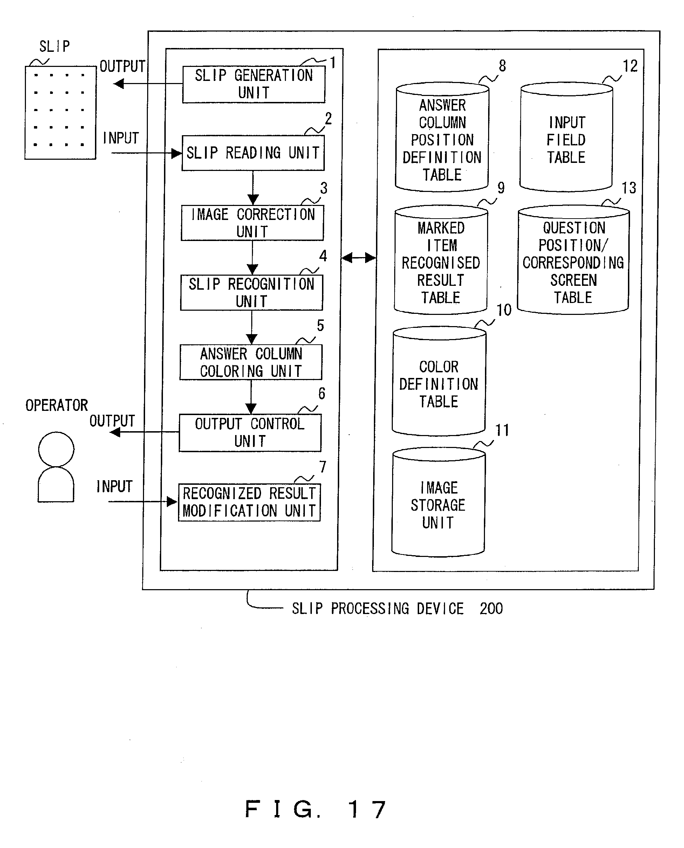

Fig. 17 shows the configuration of the slip processing device of the second preferred embodiment;
Fig. 18 shows an example of the data structure of a question position/corresponding screen table;
Fig. 19A shows an example of an input field screen;
Fig. 19B shows an example of a question position/corresponding screen table in the input field screen shown in Fig. 19A;
Figs. 19C and 19D show examples of check screens;
Fig. 20 is a flowchart showing a scroll control process on the check screen;
Fig. 21 shows the configuration of the slip processing device;
Fig. 22 shows the configuration of the computer; and
Fig. 23 shows how to load the program onto the computer.

The preferred embodiments of the present invention are described below with reference to the drawings. The same devices and the like are denoted by the same reference numbers throughout the following description and their repeated explanations are omitted. In the following examples, it is assumed that the slip processing device adopts a graphic user interface (GUI) and an operator's instructions are inputted using a pointing device. However, the input device is not limited to a pointing device. The input device can also be a keyboard, a touch panel or the like.

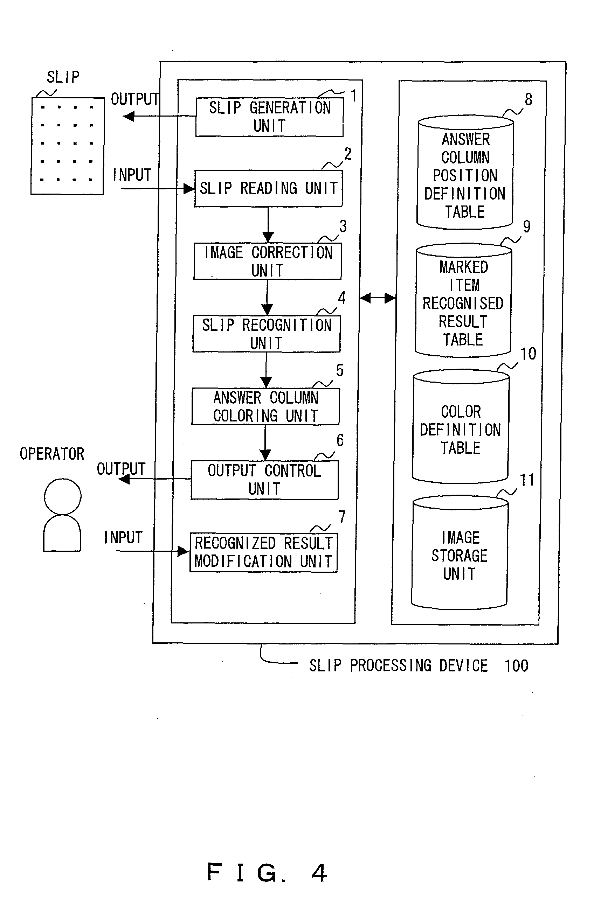

Fig. 4 shows the functional configuration of the slip processing device 100 of the present invention. The slip processing device 100 recognizes an item selected by a respondent or an examinee, by detecting the mark checked in the answer column of a slip, such as a questionnaire form, an examination answer form or the like. Then, the slip processing device 100 displays the recognized result on a screen and modifies the recognized result according to operator's instructions. As shown in Fig. 4, the slip processing device 100 comprises a slip generation unit 1, a slip reading unit 2, an image correction unit 3, a slip recognition unit 4, an answer column coloring unit 5, an output control unit 6, a recognized result modification unit 7, an answer column position definition table 8, a marked item recognized result table 9, a color definition table 10 and an image storage unit 11.

The slip generation unit 1 generates the image data of a slip (slip image data) according to operator's instructions. An operator obtains the slip by outputting the generated slip image data using a printer, which is not shown in Fig. 4. The slip generation unit 1 also generates position definition information defining a position indicating each question and each answer column corresponding to an item set in the question, in the generated slip image data and registers the information in the answer column position definition table 8. The slip image data is, for example, bit-mapped data that manages data by attaching an address to each pixel.

The slip reading unit 2 reads a slip into the slip processing device 100 as image data, and registers the data in the image storage unit 11. The image correction unit 3 corrects the vertical/horizontal positions and the angle of the image data (in such a way that the operator can easily view the data on the check screen) if the vertical/horizontal positions and the angle of the data are incorrectly read. Since this correction method is known, its detailed description is omitted here. The slip recognition unit 4 recognizes a selected item by detecting a mark checked in an answer column in the corrected image data and registers the recognized result in the marked item recognized result table 9.

The answer column coloring unit 5 modifies the values of pixels located in the vicinity of an answer column in the corrected image data by a color, depending on the recognized result and based on the color definition table 10. The output control unit 6 outputs a check screen indicating the image data and its recognized result on a display device, which is not shown in Fig. 4. The recognized result modification unit 7 modifies the recognized result of the position selected by the operator to a correct result in the recognized result display area. Furthermore, the recognized result modification unit 7 modifies the values of pixels located in the vicinity of the answer column in the image data displayed on the screen, based on the modified result.

The answer column position definition table 8 stores position definition information about the slip generated by the slip generation unit 1. The marked item recognized result table 9 stores recognized result information about the answer column recognized by the slip recognition unit 4. The recognized result modification unit 7 updates the recognized result stored in the marked item recognized result table 9, according to operator's instructions. The color definition table 10 stores color information defining the values of the modified pixels located in the vicinity of the answer column in the image data, depending on the recognized result. The image storage unit 11 stores the image data read into the slip processing device 100 by the slip reading unit 2.

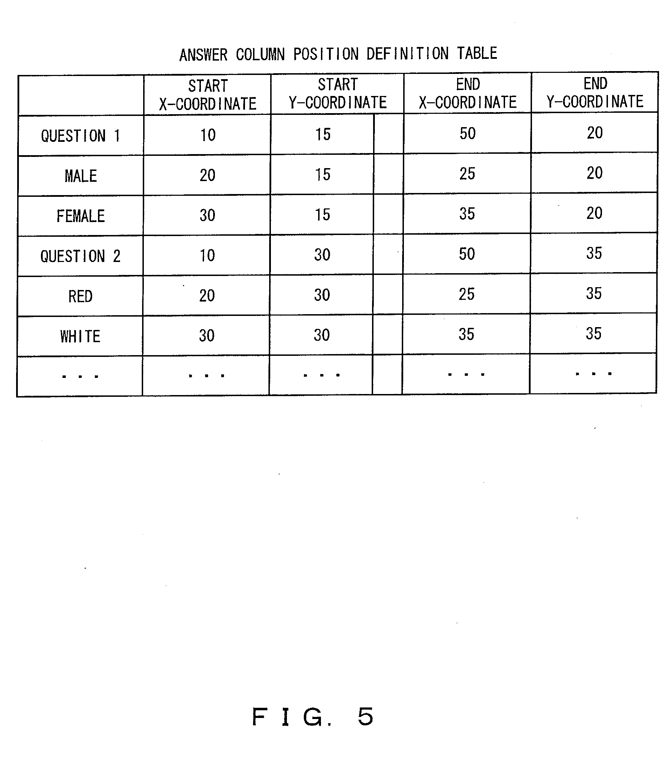

Next, the data structure of each table is described with reference to Figs. 5 through 8 . Firstly, the data structure of the answer column position definition table 8 is described with reference to Fig. 5. The answer column position definition table 8 stores position definition information indicating the position of each question and the position of an answer column corresponding to the item which is set for the question. Furthermore, in order to express the position in the position definition information by coordinates, two vertical/horizontal axes (x- and y-axes) are set using one point on the slip image data as an origin, and a distance from the origin on each axis is indicated by the number of pixels. In order to indicate the position of an answer column, the position definition information includes start/end x-coordinates and start/end y-coordinates, which indicate the range of each answer column.

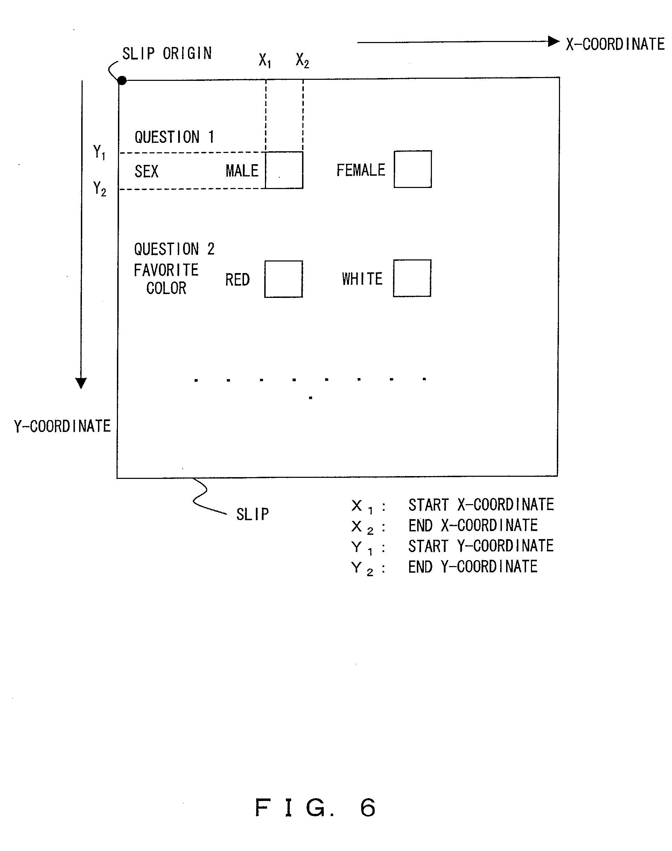

Fig. 6 shows an example of the setting of an origin and two axes in order to indicate a position on the slip image data. In Fig. 6, the upper left corner of the slip image data, its horizontal direction and its vertical direction are set as the origin, the x-axis and the y-axis, respectively, so that the operator can easily view the slip. Furthermore, the positive direction of the x-axis is set from left to right in Fig. 6 when viewing facing it and the positive direction of the y-axis is set from top to bottom. In the following description, it is assumed that the origin and two axes are set on the slip image data as shown in Fig. 6. However, the method for defining the position on the slip image data is not limited to that. For example, the origin can also be set at the center of the slip image data.

In Fig. 5, information about question 1 indicates that the data is located 10 to 50 pixels and 15 to 20 pixels away from the origin on the X-axis and the Y-axis, respectively. In this case, information about a question in the image data contains one about the question, one for items provided for the question and one for the answer column for each item. In the example shown in Fig. 6, information about question 1 contains a question "What is your sex?", items " male" and "female", and two answer columns corresponding to each item.

The answer column corresponding to item "male" of question 1 is located 20 to 25 pixels and 15 to 20 pixels away from the origin on the x-axis and the y-axis, respectively. The answer column corresponding to item "female" of question 1 is located 30 to 35 pixels and 15 to 20 pixels away from the origin on the x-axis and the y-axis, respectively.

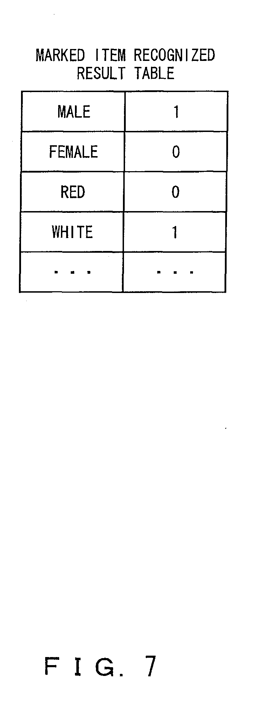

Next, the data structure of the marked item recognized result table 9 is described with reference to Fig. 7. The marked item recognized result table 9 stores recognized result information indicating items provided for a question and the recognized result of the question. In Fig. 7, it is assumed that if the slip recognition unit 4 recognizes that an answer column is checked with a mark, the recognized result information becomes "1". If the slip recognition unit 4 recognizes that an answer column is not checked with a mark, the recognized result information becomes "0". If the slip recognition unit 4 recognizes that an answer column cannot be determined, the recognized result information becomes "2". This assumption is just an example.

For example, in Fig. 7, since the recognized result information of the answer column corresponding to item "male" of question 1 is 1, it is understood that this answer column is recognized to be checked with a mark.

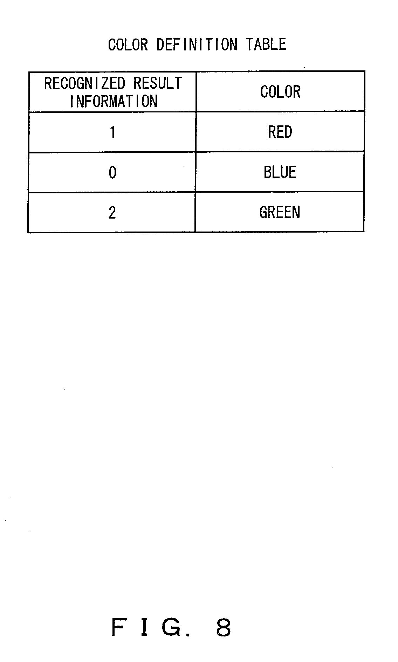

Next, the data structure of the color definition table 10 is described with reference to Fig. 8. The color definition table 10 stores color definition information defining the modified values of pixels when pixel values are modified based on their recognized results. Fig. 8 shows the case where image data is displayed in color in the image display area. According to the color definition information shown in Fig. 8, it is defined that if the recognized result information is "1", the pixel value is modified to a "value indicating red". If it is "0", it is modified to a "value indicating blue". If it is "2", it is modified to a "value indicating green" . Fig. 8 shows just an example. The pixel values can also be modified to other colors.

Furthermore, in the above example, it is also assumed that image data is displayed on a check screen. If image data is displayed in monochrome on the check screen, instead of the modification of a pixel value, the flashing/lighting of an answer column, the color reversal of an answer column or the like can also be adopted.

Lastly, the image storage unit 11 is described. The image storage unit 11 stores image data. The slip reading unit 2 registers image data in the image storage unit 11. Image data is, for example, bit-mapped data that manages data by attaching an address to each pixel.

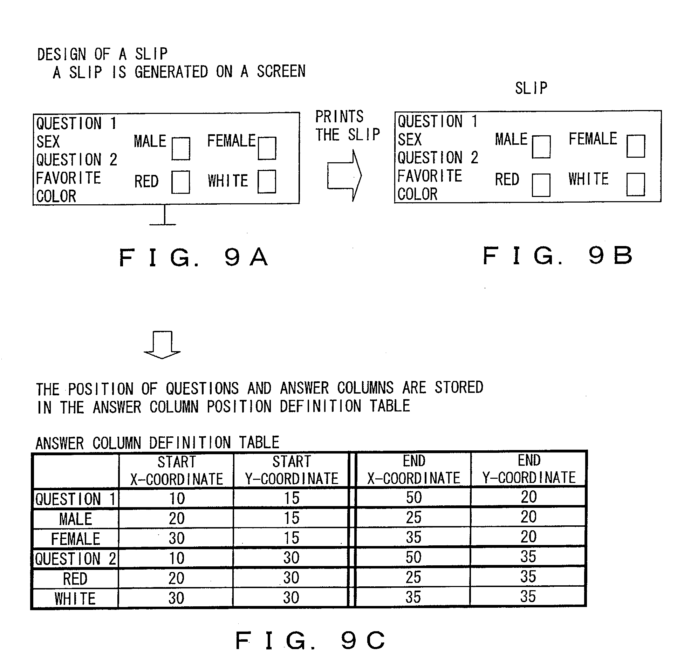

Next, the process of the slip processing device 100 is described. Firstly, before conducting a questionnaire survey or an examination using slips, the slip generation unit 1 of the slip processing device 100 generates slips. The slip generation process of the slip generation unit 1 is described below with reference to Fig. 9.

The slip generation unit 1 generates slip image data according to an operator's instruction. Fig. 9A shows how to output the generated slip on a display provided for the slip processing device 100. Then, as shown in Fig. 9B, the operator obtains a slip by outputting the generated slip image data using a printer provided for the slip processing device 100. As shown in Fig. 9C, the slip generation unit 1 also generates position definition information indicating the positions of each question and its answer column provided for each question on the slip, based on the generated slip image data, and registers the information in the answer column position definition table 8.

A questionnaire survey or an examination is conducted using slips generated in this way and the slips are collected. Then, the slip processing device 100 detects marks checked in their answer columns on the slip.

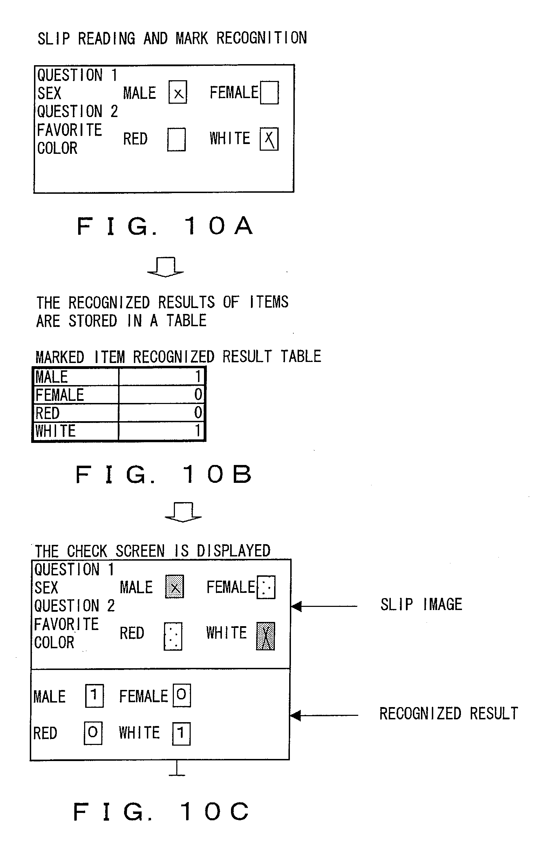

Next, the process of the slip processing device 100 detecting the mark checked in the answer column of the slip is described with reference to Fig. 10. Firstly, as shown in Fig. 10A, the operator obtains a slip with a mark checked in an answer column and the slip processing device 100 reads the slip as image data using the slip reading unit 2. The image correction unit 3 corrects deformation caused at the time of reading the image data. The corrected image data is stored in the image storage unit 11.

Then, the slip recognition unit 4 detects a mark checked in an answer column in the corrected image data and, as shown in Fig. 10B, stores its recognized result in the marked item recognized result table 9. Then, the answer column coloring unit 5 modifies the values of pixels located in the vicinity of the answer column in the image data, based on the recognized result. After the modification of the pixel values is completed, as shown in Fig. 10C, the output control unit 6 displays the image data, whose pixel values are modified, in the image display area of the check screen.

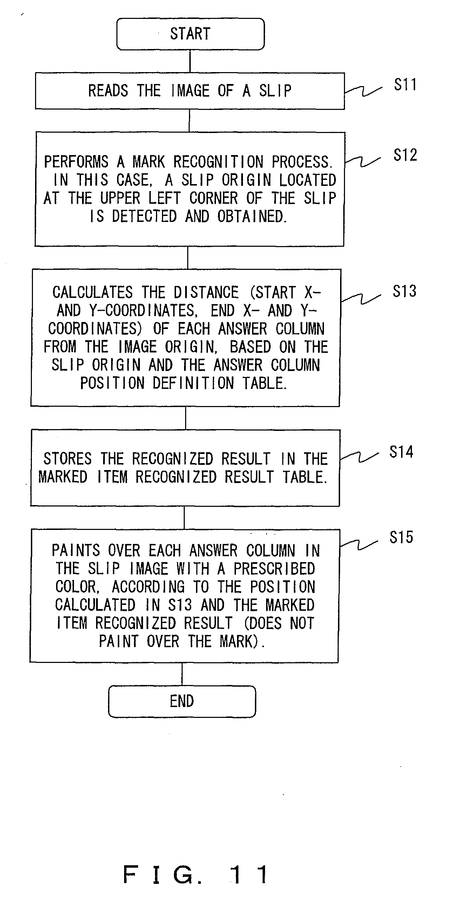

Next, the mark recognition process is described in detail below with reference to Fig. 11. In the following description, it is assumed that pixels, whose values are modified, are located in the frame of an answer column.

Firstly, the slip reading unit 2 reads the slip into the slip processing device 100 as image data, the image correction unit 3 corrects deformation caused at the time of reading the slip image data, and the image storage unit 11 stores the data (S11).

Then, the mark recognition process is performed. In this case, the slip recognition unit 4 extracts the image data from the image storage unit 11, and detects the upper left corner of the image data as a slip origin Oₛ (S12) .

Then, the slip recognition unit 4 calculates a position where each answer column is located in the image data, based on the slip origin Oₛ detected in S12 and the position definition information stored in the answer column position definition table 8, and obtains the image data located in the frame of the answer column from the image data (S13). Then, the slip recognition unit 4 recognizes a selected item by detecting a mark checked in each answer column, based on the obtained image data, and registers its recognized result in the marked item recognized result table 9 (S14).

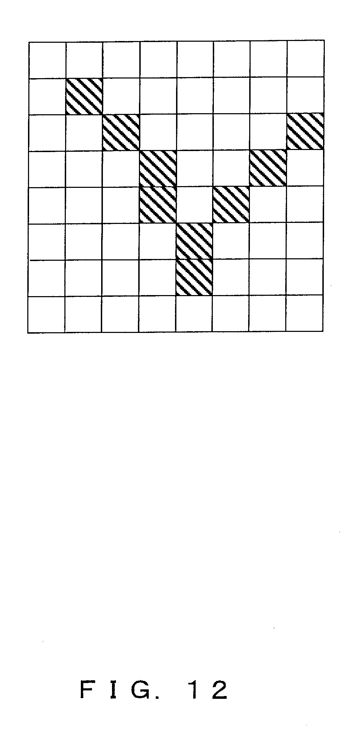

Fig. 12 shows an example of the image data of an answer column. As shown in Fig. 12, an answer column is composed of a plurality of pixels. In this description, it is assumed that memory per pixel is composed of eight bits. If memory per pixel is composed of eight bits, 256 different colors can be displayed. The mark recognition process is described in detail below with reference to Fig. 12, focusing on one answer column. It is assumed that the background color of a target slip is white and a mark checked in the answer column is black. It is also assumed that the answer column is composed of seven pixels × eight pixels, as shown in Fig. 12.

The slip recognition unit 4 converts image data read by the slip reading unit 2, into a 256-gradation gray scale image. The slip recognition unit 4 judges each pixel composing an answer column, based on this converted data. If the pixel value is 128 or less, it determines the color of the pixel value to be black. If the pixel value is more than 128, it determines the color of the pixel value to be white. A pixel, whose color is determined to be black, composes a mark checked in the answer column.

The slip recognition unit 4 has a first threshold value and a second threshold value in order to determine whether an answer column is checked with a mark and to determine whether an answer column that is checked with a mark can be recognized, respectively. In this case, the first threshold value is larger than the second threshold value. The slip recognition unit 4 calculates the ratio of black pixels to all pixels composing the answer column. If the ratio exceeds the first threshold value, it determines that the answer column is checked with a mark. If the ratio exceeds the second threshold value, but is less than the first threshold value, it determines that it cannot be recognized whether an answer column is checked with a mark or not. If the ratio is less than the second threshold value, it determines that the answer column is not checked with a mark.

If it is determined that an answer column is checked with a mark, the slip recognition unit 4 writes "1" in the recognized result information corresponding to the answer column in the marked item recognized result table 9. If it is determined that it cannot be recognized whether an answer column is checked with a mark or not, it writes "0" in the recognized result information corresponding to the answer column. If it is determined that an answer column is not checked with a mark, it writes "2" in recognized result information corresponding to the answer column. The slip recognition unit 4 performs the process for all answer columns contained on the slip.

Then, the answer column coloring unit 5 obtains recognized result information corresponding to each answer column from the marked item recognized result table 9, and determines a pixel value corresponding to the recognized result information. Then, the answer column coloring unit 5 changes (modifies) the values of the pixels located in the frame of the answer column that do not form the mark, that are obtained from the image data in S13, based on its recognized result and color definition information stored in the color definition table 10 (S15). Then, it terminates the process. The image data, whose pixel values are changed and in which an answer column is accentuated based on the result of mark detection, is stored in the image storage unit 11.

Next, the coloring process of the answer column coloring unit 5 is described in more detail with reference to the tables shown in Figs. 7 and 8. For convenience sake, it is assumed that the background color of a slip is white and a mark is black. According to the marked item recognized result table 9 shown in Fig. 7, the recognized result of a mark checked in item "male" is "1". In other words, the answer column is checked with a mark. According to the color definition table 10 shown in Fig. 8, a pixel value corresponding to the recognized result "1" is a "value indicating red" . In this case, the answer column coloring unit 5 chnages the values of pixels, which are determined to indicate white, of all pixels composing image data located in the answer column corresponding to the item "male" in the image data, to the "value indicating red".

The image data, whose pixel values are modified in this way, is outputted in the image display area of the check screen. Since answer columns in the image data are classified into colors and are displayed on the check screen, based on their results of mark recognition, the operator can easily distinguish an answer column checked with a mark from one without a mark in the image.

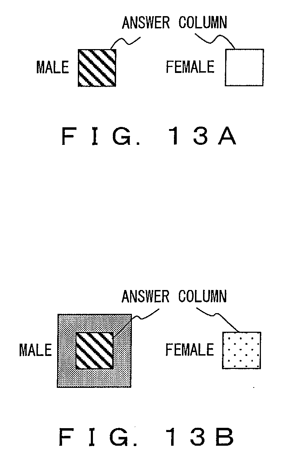

Next, the variations of the coloring method are described. For example, the values of pixels composing a mark can also be modified instead of the values of pixels other than those composing a mark in the frame of the answer column. Alternatively, as shown in Fig. 13A, the answer column can be painted over with the color of a writing instrument instead of checking it with a check mark or a circle. In this case, the painted answer column cannot be colored by the method described above. If the entire answer column can be painted over with a color other than the background color of the slip in this way, the answer column coloring unit 5 can color pixels located less than a specific distance away from the answer column, depending on its recognized result. For this purpose, the slip recognition unit 4 is provided in advance with a third threshold value indicating the ratio of pixels composing a mark to all pixels composing the answer column. For the third threshold value, 70% or the like is used. Recognized result information indicating that "although an answer column is checked with a mark, the entire column is colored by a color other than the background color" is defined in advance. In the following description, it is assumed that such a recognized result is defined as "4".

In such a configuration, the slip recognition unit 4 performs the same recognition process as described above. In this case, the slip recognition unit 4 calculates the ratio of pixels composing a mark to all pixels composing the answer column and determines whether the calculated ratio exceeds the third threshold value. If the calculated ratio exceeds the third threshold value, it writes "4" in the marked item recognized result table 9 as recognized result information corresponding to the answer column. If the calculated ratio is more than the first threshold value and less than the third threshold value, it writes "1" in it.

When changing pixel values,' based on the recognized result, the answer column coloring unit 5 changes the values of pixels located less than a specific number of pixels away from the frame of the answer column to those indicating a color corresponding to the recognized result if the recognized result information of the answer column is "4".

Fig. 13B shows an example result obtained by coloring the answer column, based on the variation described above. In Fig. 13B, two items "male" and "female", and an answer column corresponding to each item are shown. As in Fig. 13B, since the answer column corresponding to the item "male" is painted over black, pixels in this answer column cannot be colored. Therefore, the slip recognition unit 4 determines the recognized result information of the mark in this answer column to be "4" . Then, the answer column coloring unit 5 changes the values of pixels located less than a specific number of pixels away from the frame of an answer column corresponding to the item "male" to a value corresponding to the recognized result. In this case, the values are chnaged to a "value indicating red", based on the recognized result information. Thus, the circumference of the answer column is colored red in the image data outputted on the display.

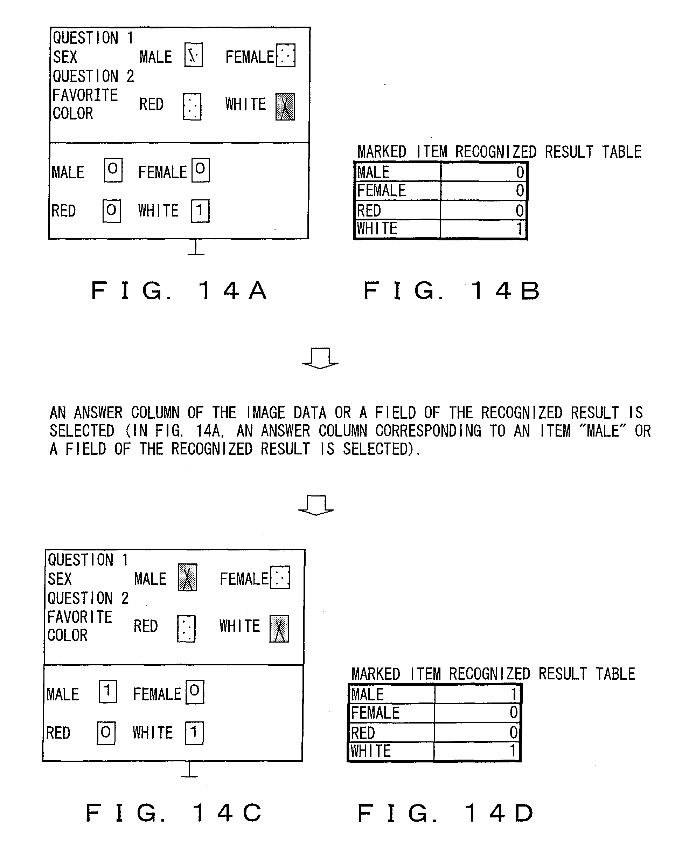

Next, the recognized result modification process is described with reference to Fig. 14. Firstly, after the recognition process is completed, the output control unit 6 of the slip processing device 100 outputs a check screen on the display device, which is not shown in Fig. 14. Since the check screen has been described with reference to Fig. 2, its detailed description is omitted here.

Figs. 14A and 14B show examples of the slip check screen and recognized result information corresponding to the screen. On the check screen shown in Fig. 14A, although an answer column corresponding to item "male" outputted in the image display area is checked with a mark, the answer column is recognized to be "without a mark". In this case, this answer column is colored blue, which indicates "without a mark". In Fig. 14B, recognized result information corresponding to the answer column is "0" indicating "without a mark". Therefore, the recognized result information of this answer column must be modified.

The operator selects an answer column corresponding to item "male" in the image display area of the check screen, using a pointing device or a keyboard. Alternatively, he/she selects recognized result information corresponding to item "male" in the recognized result display area.

After the selection is completed, the recognized result modification unit 7 modifies the recognized result information to a value indicating contents different from the current value and also modifies the color of the answer column, based on the modified result. In Figs. 14A and 14B, since the recognized result information of the answer column, corresponding to item "male" is "0" indicating "without a mark", the recognized result modification unit 7 modifies the recognized result information to "1" indicating "with a mark", as shown in Figs. 14C and D, and modifies the color of the answer column to red indicating "with a mark", based on the modified result.

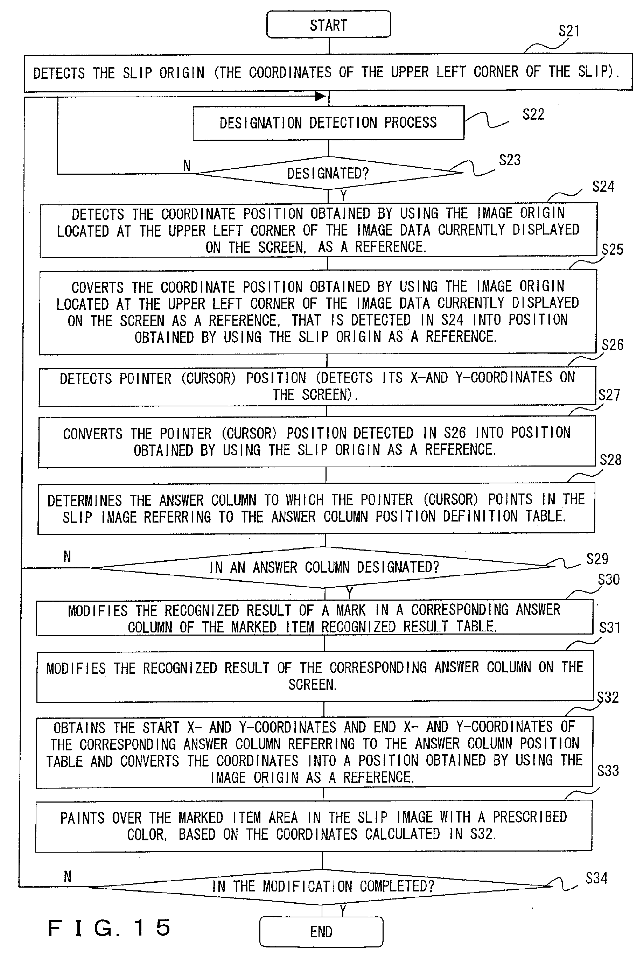

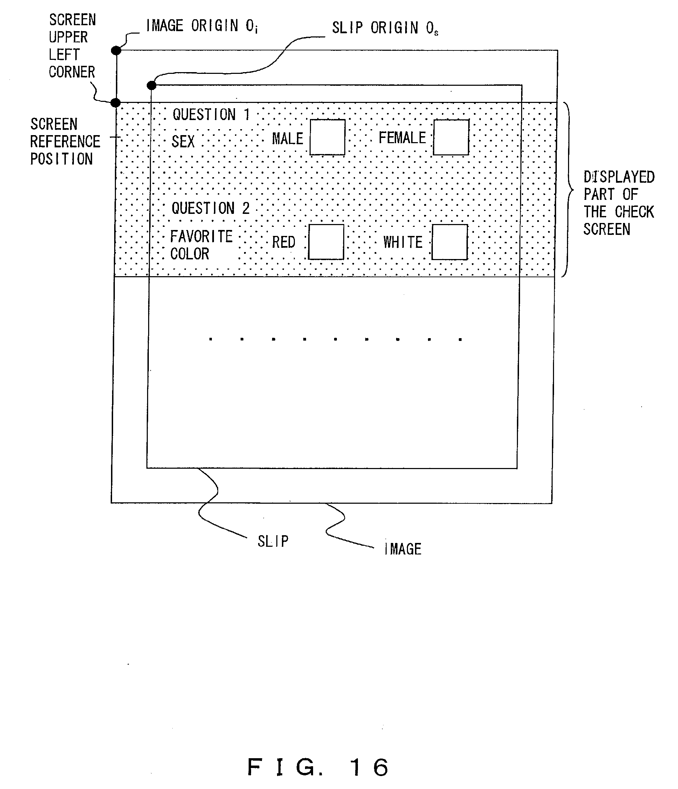

Next, the modification process is described in more detail with reference Fig. 15. In the following description and in Fig. 16, it is assumed that the upper left corner of the slip image, the upper left corner of image data and the upper left corner of the screen are a slip origin Oₛ, an image origin Oᵢ and a screen origin O_{sc}, respectively. However, the positions of these origins are not limited to those. Since each origin is a reference point relatively indicating the position of each image, it can be freely changed. The case where the operator issues an instruction to modify by selecting (clicking, etc.) one point in an answer column of image data, in other words, one pixel of all pixels composing the answer column, using a pointing device, is described below.

Firstly, the recognized result modification unit 7 detects the origin Oₛ (slip origin) of a slip image contained in image data and obtains its coordinates obtained by using an image origin Oᵢ as a reference (S21) .

Then, the recognized result modification unit 7 waits until it detects an operator's instruction to modify (S22 and no in S23). When recognizing the instruction to modify (yes in S23), the recognized result modification unit 7 detects the coordinates of a pixel P_{osc} in the image data outputted at the upper left corner of the image display area, that is, at screen origin O_{sc}, obtained by using image origin Oᵢ as a reference area on the current screen, (S24).

Fig. 16 shows the position relationship between the slip origin Oₛ, the image origin Oᵢ and the screen origin O_{sc} on the check screen. As shown in Fig. 16, since there is often a blank around a read slip, image origin Oᵢ does not coincide with slip origin Oₛ in the image data, and they are often located as shown in Fig. 16. The meshed section indicates a part outputted in the image display area of the current check screen. A point located at the upper left corner of the meshed section corresponds to screen origin Oₒₛ. An image data pixel displayed at this screen origin Oₒₛ is P_{osc}. If the entire image data cannot be viewed in the image display area of the check screen due to the image data's large size, part of the image data is displayed as shown in Fig. 16. In order to display the rest of the image data, the operator must scroll the image display area.

Then, the recognized result modification unit 7 converts the coordinates of pixel P_{osc} obtained by using image origin Oᵢ calculated in S24 into coordinates obtained by using slip origin Oₛ as a reference (S25) . This conversion can be easily made by subtracting the coordinates of the slip origin Oₛ obtained by using the image origin Oᵢ as a reference from the coordinates of pixel P_{osc} obtained by using the image origin Oᵢ as a reference.

Furthermore, the recognized result modification unit 7 obtains the screen coordinates of a pixel Pp, that are selected by the operator (S26), and converts the coordinates into coordinates to be obtained by using slip origin Oₛ as a reference (S27) . The conversion in S27 can be made by adding the coordinates of pixel P_{osc} obtained by using slip origin Oₛ calculated in S25, as a reference, to the screen coordinates of pixel Pp.

The recognized result modification unit 7 determines whether pixel Pp composes a part of the answer column on the slip image, based on position definition information stored in the answer column definition table 8 and the coordinates of pixel Pp obtained by using slip origin Oₛ calculated in S27. Furthermore, if pixel Pp composes a part of the answer column on the slip image, the recognized result modification unit 7 determines the answer column composed of pixel Pp (S28) . If it determines that pixel Pp does not compose a part of the answer column (no in S29), the process returns to S22. When the process returns to S22, the recognized result modification unit 7 can also notify the operator of that pixel Pp cannot be modified, by beeping, etc.

If it determines that pixel Pp composes a part of the answer column (yes in S29), the recognized result modification unit 7 obtains recognized result information about the answer column from the marked item recognized result table 9 and modifies the value of the recognized result information to a value different from the current value (S30) . The modified value can be, for example, determined as follows:
- If the current value is "1", the value is modified to "0".
- If the current value is "0", the value is modified to "1".
If the current value is "2", the value is modified to "1".

Even if it is determined that the current value is changed as above, the operator can modify it to an arbitrary value by re-selecting (re-clicking, etc.) the same answer column if the modified value is different from one that the operator has in mind.

Then, the recognized result modification unit 7 modifies the value of the recognized result information outputted in the recognized result display area of the check screen to a value after modification (S31).

Furthermore, the recognized result modification unit 7 refers to the answer column position definition table 8 and obtains position definition information about the answer column. Since these coordinates are obtained by using slip origin Oₛ as a reference, the recognized result modification unit 7 converts the coordinates into coordinates to be obtained by using image origin Oᵢ as a reference (S32).

The recognized result modification unit 7 obtains image data in the vicinity of a corresponding answer column from the image data, based on the coordinates calculated in S32. Furthermore, the recognized result modification unit 7 obtains color definition information corresponding to the modified value of the recognized result information from the color definition table 10 and chnages the values of pixels composing the image data, based on the color definition information (S33) . Thus, the color of the answer column in the image data outputted to the image display area of the check screen can be changed. Since its coloring method is the same as that of the answer column coloring unit 5, its description is omitted here.

Lastly, the recognized result modification unit 7 determines whether there is an instruction to terminate, from the operator (S34). If there is no instruction to terminate (no in S34), the process returns to S22. If there is an instruction to terminate (yes in S34), it terminates the process.

Although it is described above that the modification process is performed by the operator selecting an answer column contained in the image display area of the check screen, a field indicating the recognized result information contained in the recognized result display area of the check screen can also be selected instead of the answer column contained in the image display area of the check screen. In this case, the processes in S24 through S29 are unnecessary.

Next, the second preferred embodiment is described. On the slip processing device 200 of the second preferred embodiment, the scrolling of the image display area is linked with the switching of contents outputted in the recognized result display area of the check screen. For that purpose, the slip processing device 200 of the second preferred embodiment further comprises an input field table 12 and a question position/corresponding screen table 13 in addition to the units and tables of the slip processing device 100 shown in Fig. 4.

The operation of each unit composing the slip processing device 200 of the second preferred embodiment is basically the same as that of the slip processing device 100 of the first preferred embodiment. However, the slip processing device 200 differs from the slip processing device 100 in that it generates an input field screen and in the scroll control method of the check screen. The operation of each unit of the slip processing device 200 of the second preferred embodiment is described below, focusing on its differences from the slip processing device 100 of the first preferred embodiment.

The slip generation unit 1 of the slip processing device 200 of the second preferred embodiment generates an input field screen displaying a recognized result for each question, and registers the input field screen in an input field table 12. The generation and registration of this input field screen can also be conducted prior to the answer column recognition process of the slip recognition unit 4. The input field screen is outputted in the recognized result display area of the check screen. The output control unit 6 outputs the check screen on the display. If the operator instructs the display to scroll image data in the image display area of the check screen, the output control unit 6 switches an input field screen to be outputted in the recognized result display area of the check screen in synchronization with the scroll of the image data.

The input field table 12 stores input field screens in relation to their names, each of which identifies each input field screen. The question position/corresponding screen table 13 stores position correspondence information that relates a position where each question is set in the image data to an input field screen that displays the recognized result of the question, on the check screen, based on the answer position definition table 8.

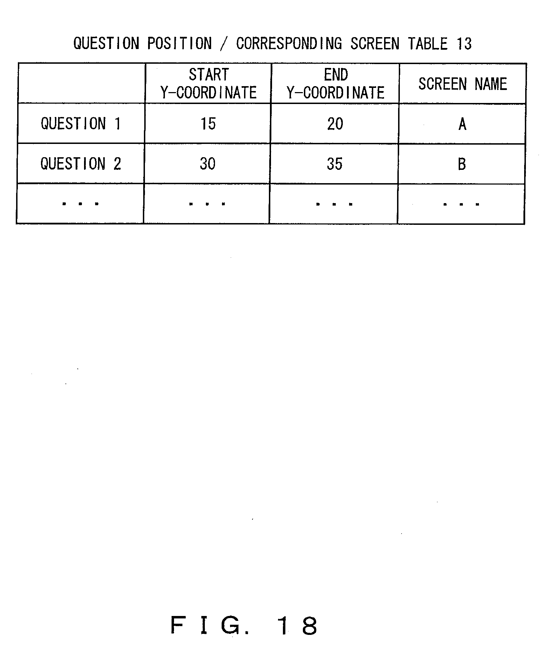

The data structure of the question position/corresponding screen table 13 is described with reference to Fig. 18. As shown in Fig. 18, the question position/corresponding screen table 13 stores position correspondence information. The position correspondence information contains a question number that identifies each question, coordinates that indicate the displayed range of information for the question in the image data and a screen name that identifies each input field screen that displays the recognized result of the question.

In the question position/corresponding screen table 13 shown in Fig. 18, a slip image is vertically long as shown in Fig. 1. In this case, the screen is scrolled in the y-axis direction, but it is not scrolled in the x-axis direction. Therefore, its y-coordinate indicating the start of the range (start y-coordinate) and its y-coordinate indicating the end of the range (end y-coordinate) are stored as coordinates indicating the displayed range of information for each question. Conversely, if a slip image is horizontally long and the screen is scrolled in the x-axis direction, its x-coordinate indicating the start of the range (start x-coordinate) and its x-coordinate indicating the end of the range (end x-coordinate) are stored as coordinates indicating the display range of information for each question. Furthermore, if the screen is scrolled in both the x- and y-axis directions since a slip screen is long vertically and horizontally, its start x-coordinate, its start y-coordinate, its end x-coordinate and its end y-coordinate are stored as coordinates indicating the display range of information about each question. In the following description, the case where an image is scrolled in the y-axis direction is explained. However, the second preferred embodiment is not limited to this.

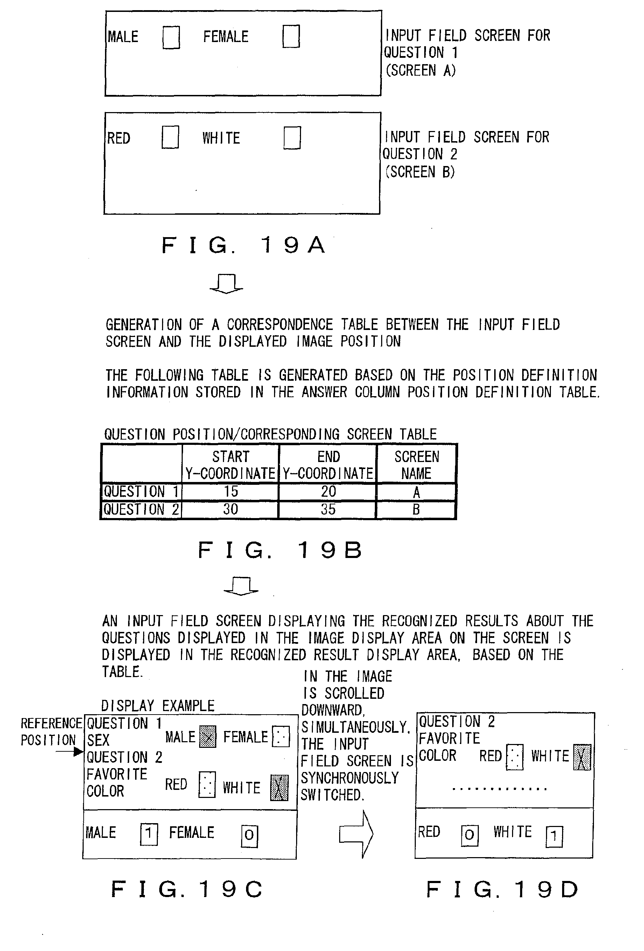

Next, the process of the slip processing device 200 of the second preferred embodiment is described with reference to Fig. 19, focusing on its differences from that of the slip processing device 100 of the first preferred embodiment.

Firstly, as shown in Fig. 19A, the slip generation unit 1 generates an input field screen for each question. Fig. 19A shows the input field screen for the slip shown in Fig. 1 for example. In Fig. 19A, two input field screens are vertically shown. The upper screen is an input field screen corresponding to question 1 on the slip shown in Fig. 1. The lower screen is an input field screen corresponding to question 2 on the slip shown in Fig. 1.

After generating an input field for each question in this way, the slip generation unit 1 registers coordinates indicating the display range of information for each question in the image data, in the question position/corresponding screen table 13, based on the position definition information stored in the answer column position definition table 8 . As a result, as shown in Fig. 19B, for example, "start y-coordinate 15, end y-coordinate 20" is stored as the display range of question 1. Furthermore, the slip generation unit 1 registers the name of an input field screen corresponding to each question in the question position/corresponding screen table 13.

After position correspondence information is registered in the question position/corresponding screen table 13 in this way, the slip recognition unit 4 performs a mark recognition process. Then, the output control unit 6 outputs the check screen on the display. The check screen comprises an image display area and a recognized result display area. An input field screen, in which a recognized result is written, is outputted in the recognized result display area. Figs. 19C and 19D show examples of such a check screen. Although each of the check screens shown in Fig. 19C and 19D is basically the same as that shown in Fig. 3, they differ in their scroll operations. Specifically, according to the slip processing device 200 of the second preferred embodiment, the output control unit 6 identifies a question outputted in the reference position of the image display area and displays an input field screen storing the recognized result of the question in the recognized result display area. If an image outputted to the image display area is scrolled, the output control unit 6 switches an input field to be outputted to the recognized result display area in synchronization with a question displayed in the reference position after scrolling. For example, in Fig. 19C, since a question outputted in the reference position of the image display area is question 1, an input field corresponding to question 1 is outputted in the recognized result display area. Similarly, in Fig. 19D, since a question displayed in the reference position is question 2, an input field corresponding to question 2 is outputted in the recognized result display area.

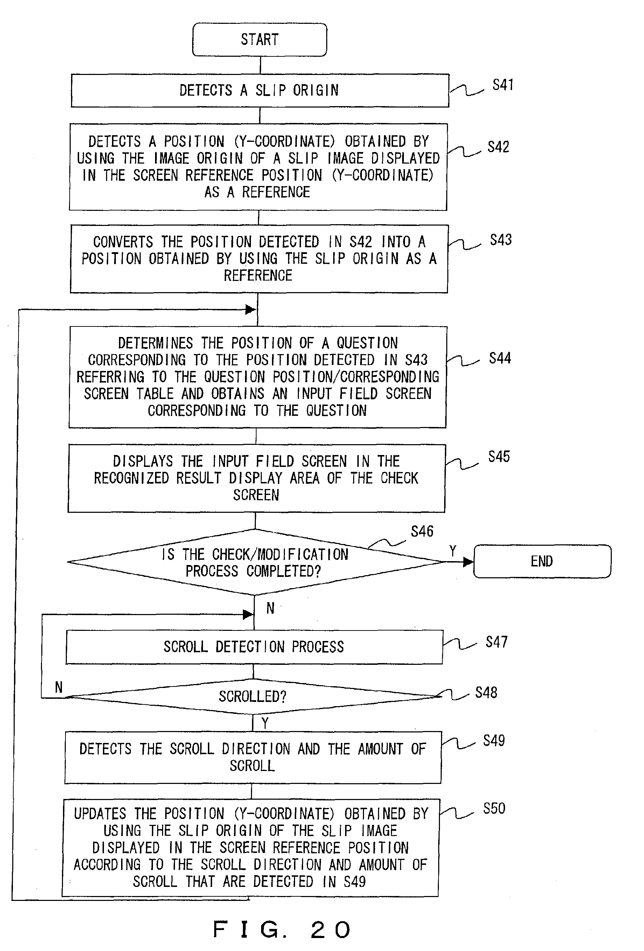

Next, the screen scroll control of the output control unit 6 of the slip processing device 200 is described in detail with reference to Fig. 20. Firstly, in check screen setting, the output control unit 6 detects slip origin Oₛ in the image data and obtains the y-coordinate of slip origin Oₛ using image origin Oᵢ as a reference (S41) . Furthermore, the output control unit 6 detects a pixel outputted in the reference position (y-coordinate) of the image display area on the check screen and obtains the y-coordinate of the pixel using image origin Oᵢ as a reference (S42).

Then, the output control unit 6 converts the y-coordinate obtained in S42 into a y-coordinate obtained by using slip origin Oₛ as a reference (S43). This conversion can be made by subtracting the y-coordinate of slip origin Oₛ obtained in S41 from the y-coordinate obtained in S42.

The output control unit 6 refers to the question position/corresponding screen table 13, determines the display range of a question on the slip, corresponding to the y-coordinate calculated in S43 and obtains the name of an input field screen corresponding to the question (S44). The output control unit 6 obtains an input field screen having the obtained screen name, from the input field table 12 and displays the obtained input field screen in the recognized result display area of the check screen (S45).

The output control unit 6 determines whether there is an operator's instruction to terminate the check/modification process (S46). If there is such an instruction (yes in S46), it terminates the process. If there is no such instruction (no in S46), it waits for an operator's instruction to scroll (S47) . When there is such an instruction (yes in S48), the output control unit 6 detects its scroll direction and the amount of scroll (S49). In this description, a scroll direction means in which direction the screen should be scrolled, in the positive direction of the y-axis or in the negative direction.

The output control unit 6 detects a pixel outputted to the reference position of the image display area on the check screen after the screen has been scrolled in a particular scroll direction and by the amount of scroll as instructed in S49, and obtains the y-coordinate of the pixel using image origin Oᵢ as a reference. Then, the process returns to S44.

Thus, the output control unit 6 changes an input field screen to be outputted to the recognized result display area of the check screen, in synchronization with a question outputted to the reference position of the image display area on the check screen. Thus, the screen scroll and switch operation that the operator conducts in order to compare the image with its recognized result, can be simplified.

Next, the variations of the second preferred embodiment are described. In the above description, an input field screen has been generated for each question and an input field screen to be outputted in the recognized result display area of the check screen has been switched in synchronization with a question displayed in the reference position of the image display area on the check screen. However, a linked input field screen can also be generated by vertically connecting input field screens in order of questions and can be outputted in the recognized result display area of the check screen. In this case, the name of an input field screen corresponding to a question is obtained from the question position/corresponding screen table 13 in synchronization with the question outputted in the reference position of the image display area on the check screen. Then, the output control unit 6 scrolls the linked input field screen outputted in the recognized result display area of the check screen and displays an input field screen with the screen name.

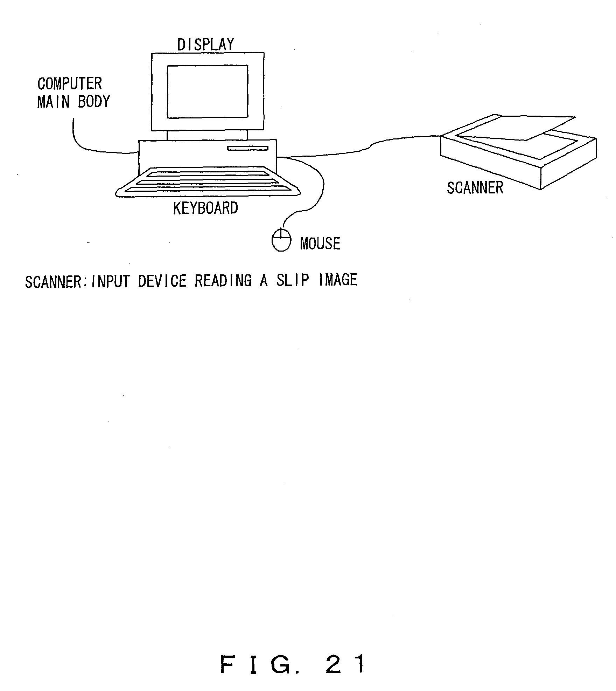

Next, Fig. 21 shows the configuration of the slip processing device. As shown in Fig. 21, the slip processing device can be realized using a computer. As shown in Fig. 21, the slip processing device using a computer comprises a display displaying a check screen and the like, a computer main body, a keyboard/mouse as input devices, and a scanner/digital camera as a slip reading unit 2. In a broader sense, the slip reading unit 2 can also be defined as an input device.

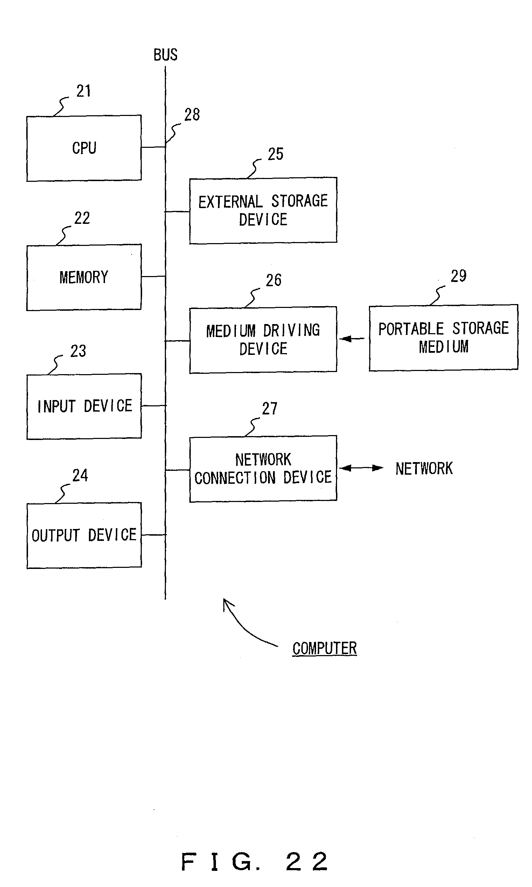

Next, Fig. 22 shows the configuration of the computer. As shown in Fig. 22, the computer comprises a CPU 21, memory 22, an input device 23, an output device 24, an external storage device 25, a medium driving device 26 and a network connection device 27. These units are connected to each other by a bus 28.

For the memory 22, a ROM (read-only memory) , a RAM (random access memory) or the like is used. The memory 22 stores a program and data to be used for the process. The ROM stores a control program enabling the computer to perform the processes of the slip generation unit 1, image correction unit 3, slip recognition unit 4, answer column coloring unit 5, output control unit 6 and recognized result modification unit 7 of the slip processing device 100 or 200, in a special program code segment.

The CPU 21 performs necessary processes by executing the control program using the memory 22.

For the input device 23, a keyboard, a pointing device, a touch panel or the like is used. The input device 23 is used for a user to input instructions and information. For the output device 24, a display, a printer or the like is used. The output device 24 is used for the computer to output inquiries, process results and the like to the user.

For the external storage device 25, a magnetic disk device, an optical disk device, a magneto-optical disk device or the like is used. The external storage device 25 realizes the answer column position definition table 8, the marked item recognized result table 9, the color definition table 10, the image storage unit 11, the input field table 12 and the question position/corresponding screen table 13. Alternatively, the control program can be stored in the external storage device 25 and can be used by loading the program onto the memory 22, as requested.

The medium driving device 26 drives a portable storage medium 29 and accesses its recorded contents. For the portable storage medium 29, an arbitrary computer-readable storage medium, such as a memory card, a memory stick, a flexible disk, a CD-ROM (compact disk read-only memory), an optical disk, a magneto-optical disk, a DVD (digital versatile disk) or the like, is used. The control program can also be stored in advance in this portable storage medium 29, and can be used by loading the program onto the memory 22 of the computer 20, as requested.

The network connection device 27 communicates with external devices through an arbitrary network (line) , such as LAN, WAN or the like, and exchanges data accompanying communication. The network connection device 27 can also receive the program from an external device and use the program by loading it onto the memory 22 of the computer 20, as requested.

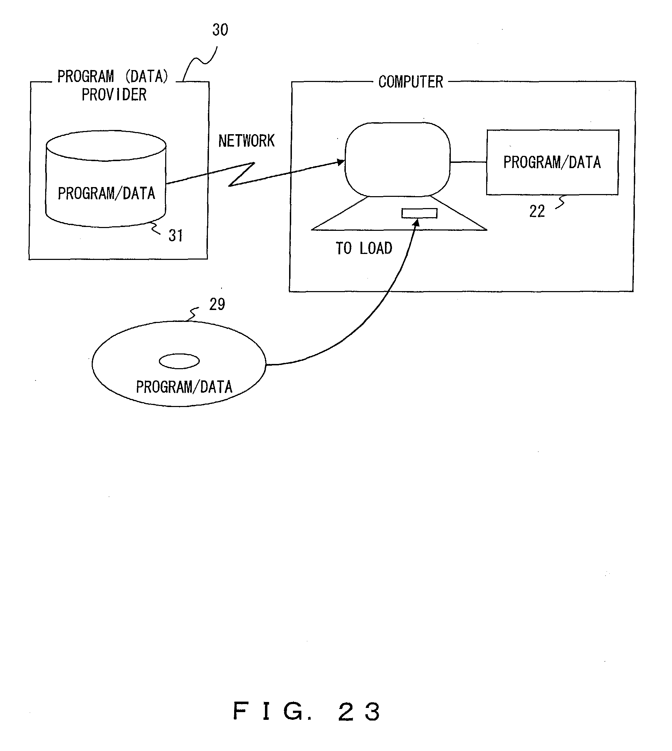

Fig. 23 shows how to load the program onto the computer shown in Fig. 22.

The function of the slip generation unit 1, which has been described in the preferred embodiment, can also be realized by a general-purpose computer. In that case, the program described above is stored in advance in a computer-readable storage medium 29. Then, as shown in Fig. 23, the computer reads the program from the storage medium 29 and temporarily stores it in the memory 22 of the computer or the external storage device 25. Then, the CPU 21 of the computer can read the stored program and execute it.

Alternatively, the program can be downloaded onto the computer from the database of a program (data) provider 30 through a communication line (network) 31. In this case, for example, the computer of the program (data) provider 30 obtains a transmission signal by converting the program data representing the program into program data signals and modulating the converted program data signals using a modem, and outputs the obtained signal through the communication line 31 (transmission medium). The computer of the slip processing device obtains the program data signals by demodulating the received transmission signal using a modem and obtains the program data by converting the obtained program data signals.

Although so far the preferred embodiments have been described, the present invention is not limited to the preferred embodiments or their variations, and a variety of modifications can also be applied to it. For example, the slip generation unit 1 can also be applied to a compiler. In this case, the memory capacity needed to compile can be reduced, and accordingly, compilation can be efficiently conducted.

As described in detail above, by detecting a mark checked in an answer column contained in a slip, based on the image data of the slip and by accentuating an image located in the vicinity of the answer column in the image data by a specific accentuation method, the operator can easily distinguish an answer column checked with a mark from one without a check mark in the image data outputted on the display device.

By the operator designating an answer column to modify in the image data of a slip, outputted to the display device in the modification process, a result can be modified. By automatically determining a detected result after modification based on the detected result, it becomes unnecessary for the operator to input a detected result after modification.

By controlling output in such a way as to automatically modify contents to be outputted in the recognized result display area that displays recognized result information indicating the result of mark detection, depending on contents outputted in the image display area that displays image data, the operation, in which the operator compares an image with its recognized result, can be simplified.

While the present invention has been described with reference to the preferred embodiments thereof, various modifications and changes may be made by those skilled in the art without departing from the true scope of the invention as defined by the claims thereof.

## Claims

1. A slip processing device (100, 200) that processes a slip with an answer column to be checked with a mark, comprising:
a slip recognition unit (4) detecting the mark checked in the answer column, based on the image data of the slip;
an image accentuation unit (5) accentuating pixels located in the vicinity of the answer column in the image data by a special accentuation method, based on the detected result; and
an output control unit (6) outputting the image data accentuated by the image accentuation unit on a display device.

2. The slip processing device (100, 200) according to claim 1, wherein
said image accentuation unit (5) is a pixel value modification unit (5) modifying the values of pixels located in the vicinity of the answer column.

3. The slip processing device (100, 200) according to claim 2, wherein
said image value modification unit (5) modifies the pixel values to values other than the values of the pixels composing the mark.

4. The slip processing device (100, 200) according to claim 2, wherein
the pixels located in the vicinity of the answer column are pixels located within the frame of the answer column.

5. The slip processing device (100, 200) according to claim 4, wherein
said image value modification unit (5) modifies the values of pixels other than the pixels checked with the mark when modifying the values of pixels located in the vicinity of the answer column.

6. The slip processing device (100, 200) according to claim 4, wherein
said pixel value modification unit (5) modifies the values of pixels composing the mark when modifying the values of pixels located in the vicinity of the answer column.

7. The slip processing device (100, 200) according to claim 2, wherein
the pixels located in the vicinity of the answer column are located outside the frame of the answer column and are located less than a specific number of pixels away from the frame.

8. The slip processing device (100, 200) according to any preceding claim, further comprising.
a recognized result modification unit (7) modifying the detected result, wherein
if the answer column is designated in the accentuated image data, the recognized result modification unit (7) modifies the detected result and the accentuation method of pixels located in the vicinity of the designated answer column, and
said output control unit (6) outputs the modified image data to the display device.

9. The slip processing device (100, 200) according to claim 8, wherein
said recognized result modification unit (7) determines a detected result after modification, based on the result of the mark checked in the designated answer column, that is detected by the slip recognition unit.

10. The slip processing device (100, 200) according to claim 8 or 9, further comprising
a pointing device, wherein
the designation of pixels is made by selecting the image data outputted on the display device using the pointing device.

11. The slip processing device (100, 200) according to claim 8, 9, or 10, wherein
said slip recognition unit (4) generates detected result information indicating the detected result,
said output control unit (6) outputs the detected result information as well as the image data on the display device,
if the answer column is designated, said recognized result modification unit (7) modifies the detected result information, and
after said recognized result modification unit (7) modifies the detected result information, the output control unit (6) outputs the modified detected result information on the display device.

12. The slip processing device (100, 200) according to claim 11, wherein
said output control unit (6) scrolls the detected result information outputted on the display device in synchronization with the image data outputted on the display device.

13. The slip processing device (100, 200) according to claim 11 or 12, wherein
said output control unit (6) outputs the detected result information on the display device for each question contained on the slip,
if the image data outputted on the display device is scrolled, said output control unit (6) detects the question displayed in a prescribed position of the display device, and
said output control unit (6) outputs the detected result information corresponding to the detected question on the display device.

14. A storage medium (22, 25, 29) , on which is recorded a program enabling a computer to process a slip with an answer column to be checked with a mark, comprising:
detecting the mark checked in the answer column, based on the image data of the slip;
accentuating pixels located in the vicinity of the answer column in the image data by a special accentuation method, based on the detected result; and
outputting the image data accentuated by the image accentuation unit on a display device.

15. A slip processing method for a computer processing a slip with an answer column to be checked with a mark, comprising
detecting the mark checked in the answer column, based on the image data of the slip;
accentuating pixels located in the vicinity of the answer column in the image data by a special accentuation method, based on the detected result; and
outputting the image data accentuated by the image accentuation unit on a display device.

16. A slip processing device (100, 200) that processes a slip with an answer column to be checked with a mark, comprising:
slip recognition means (4) for detecting the mark checked in the answer column, based on the image data of the slip;
image accentuation means (5) for accentuating pixels located in the vicinity of the answer column in the image data by a special accentuation method, based on the detected result; and
output control means (6) for outputting the image data accentuated by the image accentuation means on a display device.
